# EUROPEAN PATENT APPLICATION

(11) **EP 0 929 185 A2**
(43) Date of publication of application: **14.07.1999**
(21) Application number: 99300029.8
(22) Date of filing: 04.01.1999
(51) Int. Cl.: H04N 1/40

(54) **Imaging device**

(30) Priority: 08.01.1998 US 4638
(71) Applicant: XEROX CORPORATION, Rochester, New York 14644 (US)
(72) Inventor: Corona, Stephen C., Rochester, New York 14617 (US)
(74) Representative: Rackham, Stephen Neil

(57) **Abstract**

This invention enables enhanced addressability in the process direction when using light emitting printbars (106). A data source supplies a multiple bit word for each light emitting element (105) along a bus, with each word representing a sub-intervals exposure profile of an associated light emitting element (105). A latch (120) temporarily stores the word that represents the exposure profile for its associated light emitting element (105). A look-up table (130) decodes the temporarily stored word into a plurality of binary bits, with each bit representing the sub-interval exposure profile of its associated light emitting element (105). A parallel-to-serial converter (132) serially applies the sub-interval exposure profile binary bits to a logic element (134). That logic element (134) gates the exposure profile binary bits with a strobe signal from a controller (26). The output of the logic element (134) then causes the associated light emitting element (105) to illuminate.

## Description

Electrophotographic marking is a well known and commonly used method of copying or printing documents. Electrophotographic marking is performed by exposing a light image representation of a desired document onto a substantially uniformly charged photoreceptor. In response to that light image the photoreceptor discharges, creating an electrostatic latent image of the desired document on the photoreceptor's surface. Toner particles are then deposited onto that latent image to form a toner image. That toner image is then transferred from the photoreceptor onto a substrate such as a sheet of paper. The transferred toner image is then fused to the substrate, usually using heat and/or pressure, thereby creating a copy of the desired image. The surface of the photoreceptor is then cleaned of residual developing material and recharged in preparation for the production of another image.

Exposure of the photoreceptor can be performed using a number of different devices, including light emitting printbars. Light emitting printbars are comprised of a plurality of closely spaced discrete light sources. Because of their high resolution, high speed, relatively low cost, and ability to be individually modulated, the light emitting printbars usually used in electrophotographic printing are light emitting diode (LED) printbars.

A typical electrophotographic printing LED printbar is comprised of thousands of individual light emitting diodes formed into a linear array that extends across the width of the photoreceptor. Each light emitting diode is arranged such that it can expose a small section, referred to as a pixel, of the photoreceptor. By controlling light emissions from the individual light emitting diodes as the photoreceptor moves in a direction that is perpendicular to the axis of the LED printbar, referred to herein as the process direction, a desired latent image comprised of scan lines of thousands of pixels can be formed.

Because of manufacturing constraints, electrophotographic printing LED printbars are usually comprised of a suitable support that holds a plurality of individual LED chips arranged end-to-end, wherein each chip contains a plurality of individual light emitting diodes. For example, a typical LED printbar might be comprised of 32 abutted LED chips, with each chip having 128 light emitting diodes (for a total of 4,096 LED's) arranged in a single row. Such printbars also include driver chips that are connected to, and electrically power, the individual light emitting diodes. The driver chips include the logic circuitry needed to decode the video data that control the temporal radiant emission of individual LED's. The video data are applied to the LED printbar from an external electronic subsystem. Furthermore, electrophotographic printing LED printbars typically include optical components, such as gradient index lenses, that are positioned to focus the emitted light onto the adjacent photoreceptor.

While light emitting printbars have proven useful in electrophotographic printing, a current goal is to further enhance the print quality. High quality printing machines require "high addressability," that is, the ability to control the formation of the image in very small increments. To increase the addressability along the axis of the printbar one can increase the number of LED's per unit length. In doing so the addressability is increased, but at the cost of higher complexity and increasingly higher video data rates. Those penalties increase at the square of the inherent resolution. Furthermore, the number of control lines and decoders for the individual light emitting elements becomes very large. Increasing the video data rate in the process direction, such that the normal line time is divided into sub-lines that can be independently controlled, can make a substantial addressability improvement. However increasing the video data rate also significantly increases the required data bandwidth and image storage requirements.

Therefore, a new technique of controlling pixel exposures that assists enhanced addressability in the process direction with limited effect on the video bandwidth requirements would be beneficial. Such enhanced addressability would be particularly beneficial in high-quality color images.

This invention provides for a new technique for achieving enhanced addressability in the process direction when using light emitting printbars. Image pixels are exposed in sub-pixel line sections, with the dimension of the sections dependant upon the motion of the photoreceptor, the pixel time interval, and the number of sub-intervals that a line time is divided. The pixels are illuminated in sub-intervals that are selected in response to image words comprised of a plurality of binary bits. The principles of the present invention are useful with half-toned dots since the number of possible exposure levels is dramatically increased. For example, with a 3 pixel by 5 pixel half-tone dot and 8 sub-intervals, the number of possible exposure levels, including off, is increased from 16 (3X5+1) to 121 (3x5x8+1).

An imaging device for practicing the principles of the present invention includes a light emitting printbar having a plurality of individual light emitting elements, an electronic subsystem that supplies a multiple bit word for each light emitting element, wherein each word represents sub-intervals of a pixel period in which an associated light emitting element is to be illuminated, data latches for temporarily storing a word for each light emitting element, and a decoder for decoding the digital word such that a binary state is placed on a plurality of data lines. The apparatus further includes a parallel-to-serial converter that receives the data word in parallel and serially applies it, in response to an exposure clock, to a logic gate. The gate logically AND's the signal with a strobe signal producing a signal on a drive line that causes a light emitting element to illuminate when both signals are in the proper state. A controller controls the operation of the imaging device, causes words to be stored in the data latches, and produces the strobe signal and the exposure clock at the proper times so as to produce a desired image.

A particular embodiment in accordance with this invention will now be described with reference to the accompanying drawings; in which:-
Figure 1 shows an electrophotographic printing machine that incorporates the principles of the present invention;
Figure 2 is a simplified block diagram of the exposure control subsystem and LED printbar used in the electrophotographic printing machine illustrated in Figure 1;
Figure 3 is a block diagram useful for explaining the interactions of the exposure control subsystem and LED printbar in the electrophotographic printing machine illustrated in Figure 1; and
Figure 4 depicts one useful data word to sub-pixel exposure mapping.

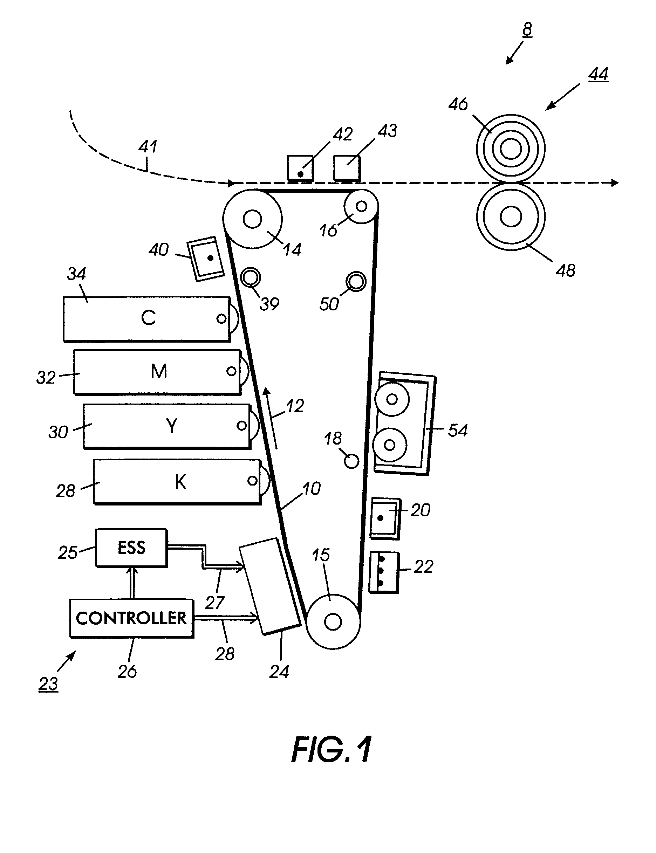

Refer now to Figure 1, wherein a preferred embodiment of the present invention is implemented in a 4-cycle color electrophotographic printing machine 8. While the printing machine 8 includes a plurality of individual subsystems that are well known in the art, they are implemented in a new, non-obvious, and useful way. The printing machine 8 includes an Active Matrix (AMAT) photoreceptor belt 10 which travels in the direction indicated by the arrow 12. Belt travel is brought about by mounting the photoreceptor belt about a driven roller 14 and tension rollers 15 and 16. The driven roller 14 is driven by a motor that is not shown.

As the photoreceptor belt travels each part of it passes through each of the subsequently described process stations. For convenience, a single section of the photoreceptor belt, referred to as the image area, is identified. The image area is that part of the photoreceptor belt which is to receive the various toner layers which, after being transferred and fused to a substrate, produce the final color image. While the photoreceptor belt may have numerous image areas, since each image area is processed in the same way a description of the processing of one image area suffices to fully explain the operation of the printing machine.

The first cycle begins with the image area passing a "precharge" erase lamp 18 that illuminates the image area so as to cause any residual charge which might exist on the image area to be discharged. Such erase lamps are common in high quality systems.

As the photoreceptor belt continues its travel the image area passes a charging station comprised of a DC scorotron 20 and an AC scorotron 22. To charge the image area in preparation for exposure to create a latent image for black toner the DC scorotron charges the image area to a substantially uniform potential of, for example, about - 500 volts. During this initial charging the AC scorotron 22 is not used. It should be understood that the actual charge placed on the photoreceptor for the black toner will depend upon many variables, such as black toner mass and the settings of the black development station (see below).

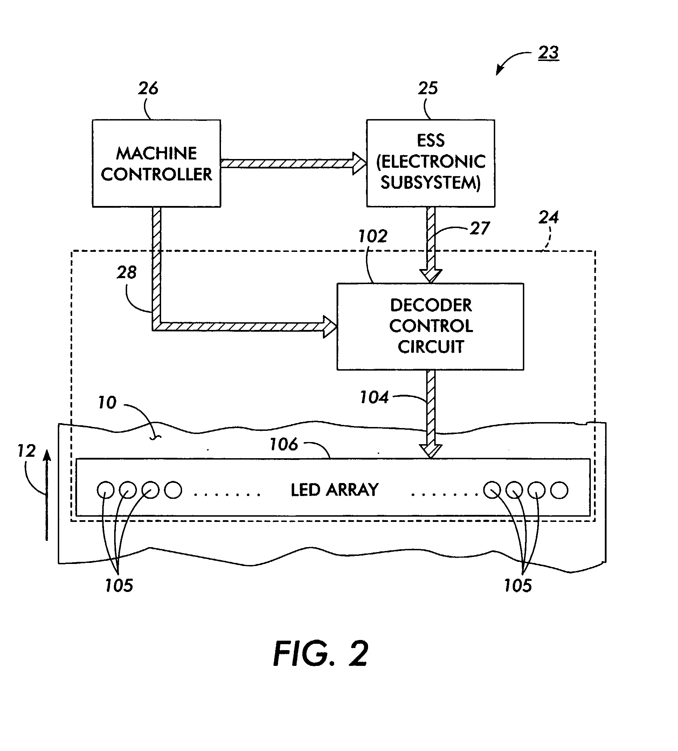

After passing through the charging station the image area advances until it reaches an exposure station 23 where the image area is exposed to create a latent image for black toner. The exposure station includes a "page width" LED printbar 24 that includes a plurality of light emitting diodes. The LED printbar is located adjacent the photoreceptor such that the light emitting diodes can selectively illuminate the photoreceptor to produce latent line images on the photoreceptor 10 as it moves past the printbar. The LED printbar 24 receives image data from an electronic subsystem 25 via a bus 27 and control signals from a controller 26 via a bus 28. Figure 2 shows these elements more clearly. For convenience it is beneficial to refer to the image data on bus 27 as an image word.

Referring now to Figure 2, the controller 26 synchronizes the overall operation of the printing machine 8. Specifically, it tracks the motion of the image area and informs the electronic subsystem when the image area is in position to receive the black latent image. In response, the electronic subsystem sends image data for a line of a black latent image to the LED printbar at the proper time. The image data is received by a decoder 102. At the proper time, as controlled by the controller 26, the decoder 102 decodes the image data and sends drive signals via a bus 104 to each of the light emitting diodes 105 in a diode array 106. The light emitting diodes then expose the photoreceptor in accordance with the decoded image data so as to produce a black latent image of a first scan line. As the photoreceptor continues its motion, new image data is received by the decoder 102 and other lines of the black latent image are produced. As the image area continues advancing the process continues repeating until a complete black latent image is produced.

It should be understood that each light emitting diode 105 is directly controlled by a logic level on the bus 104. Since the LED printbar has 4096 individual light emitting diodes, the bus 104 has 4096 control lines. In the printing machine 8 each image word is comprised of 4 individual video data bits. Therefore, each light emitting diode can be controlled in 16 (2^{N}) increments.

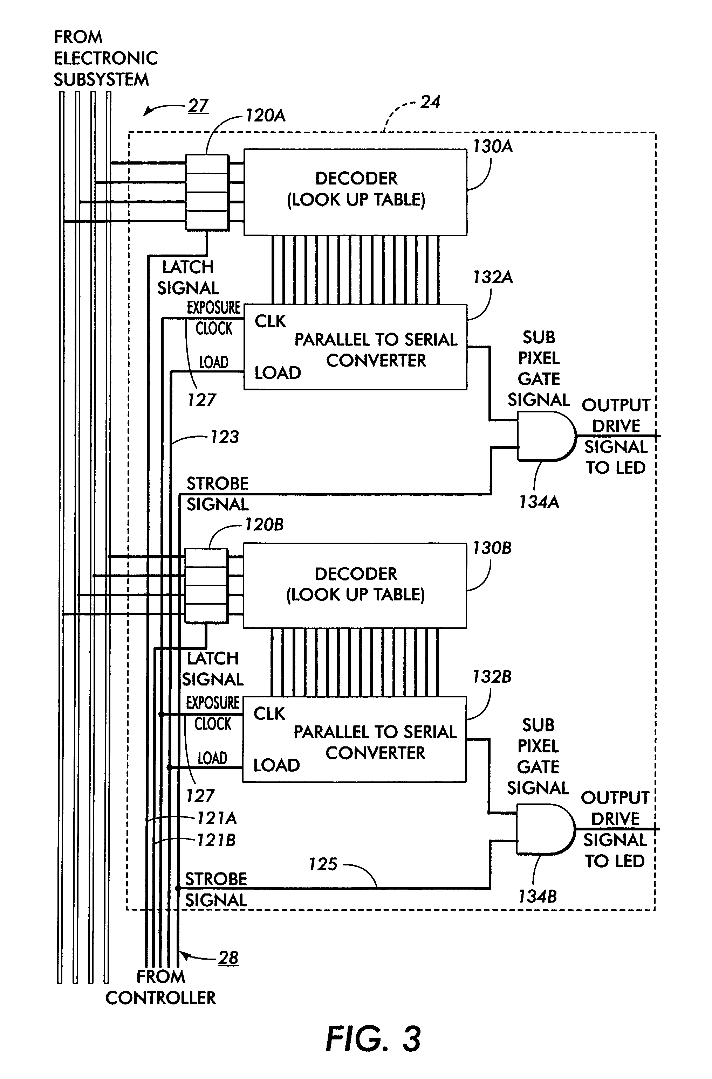

Figure 3 is useful in understanding how the exposure station 24 operates. While Figure 3 illustrates the controls for two light emitting diodes, it is to be understood that each light emitting diode on the device is controlled in a similar manner. The image word for each pixel is applied to the temporary storage registers 120A and 120B via data path 27. Each register 120 stores the image word that is applied from data path 27 when a latch signal is applied. The latch signal is derived from logic circuitry (which is not shown) that synchronizes the timing to photoreceptor velocity. Since each data latch has its own latch line, the lines 121A and 121B, the controller causes each data latch to selectively capture a data word for a light emitting diode 105 that is associated with that latch. This enables the electronic subsystem to send image words for all of the light emitting diodes along one data path. After capture, the latched image word is applied to an associated decoder (look-up table), the decoders 130A (associated with data latch 120A) and 130B (associated with data latch 120B). Those decoders decode the captured image words of 4 bits each into signals on 16 sub-pixel lines that are applied to an associated parallel-to-serial converter, the parallel-to-serial converter 132A (associated with decoder 130A) and the parallel-to-serial converter 132B (associated with decoder 130B).

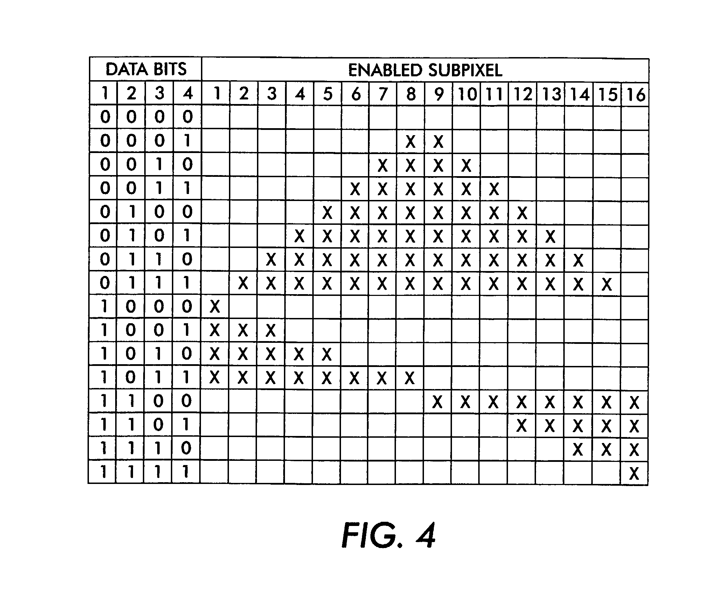

One possible mapping of four bit image words to 16 sub-pixel signals is shown in Figure 4. The left four columns present the 16 possible image words that might be stored in a data latch, while the right 16 columns represent an exemplary sub-pixel signal mapping. For example, with the image word 0000, none of the sub-pixel lines are HIGH, while the image word 0001 causes sub-pixel lines 8 and 9 to be HIGH. Another example is the digital word 1011 in which sub-pixel lines 1 through 8 are HIGH. A HIGH sub-pixel signifies that the associated light emitting diode can be illuminated in that sub-pixel time interval. Thus if the image word is 0000, the associated light emitting diode is not enabled when imaging the particular scan line. But if the image word is 1011, the light emitting diode is enabled for the first half of the scan line. The process of actually causing the light emitting diodes to illuminate in accord with the sub-pixel line signals is described below. It should be understood that the mapping illustrated in Figure 4 is exemplary only. The actual mapping used in an application will depend upon the result to be accomplished. In Figure 4, the result is to "grow" pixels from the center in accordance with the image word. This can assist in the production of high quality half-toned color dots. Other possible mappings might improve edge-placement so as to reduce "jaggies," that is, non-linear edges on angular lines.

Turning once again to Figure 3, just before imaging a scan line, the controller 26 applies a load signal via line 123 to the parallel-to-serial converters 132A and 132B. The load signal causes those converters to load the sub-pixel information from the decoders 130 to the parallel to serial converters 132. Beneficially all (4096) parallel-to-serial converters are loaded simultaneously. After loading, the electronic subsystem and the controller can begin storing information in the data latches 120 for the next scan line.

The parallel-to-serial converters then apply the first sub-pixel signal to an associated AND gate, the gates 134A and 134B. Those gates also receive a common strobe signal from the controller 26 on a line 125. When the image area advances to the proper location the controller 26 takes the strobe signal HIGH. The first sub-pixel signal is then output from the AND gates into LED drivers (which are not shown). Those drivers cause the light emitting diode associated with the AND gate to be lit if that gate has a HIGH signal. One-sixteenth of the scan line interval later the controller 26 applies an exposure clock input via a line 127 to the parallel-to-serial converters. Those converters then apply the second sub-pixel signal to the AND gates 134A and 134B. The process then continues until all 16 sub-pixel signals have been sequentially applied to the AND gates.

As previously indicated, after imaging the first scan line the above process repeats for the other scan lines until a complete black latent image is produced on the photoreceptor. One major advantage of producing scan lines as described above is that the 4 bits comprising an image word can control 16 sub-pixel signal lines thereby producing an apparent resolution enhancement of 16 times. While the 4 data lines cannot decode all the possibilities of the 16 sub-lines, the 16 possibilities that can be selected is sufficient to produce the desired results. This decoding scheme results in a significant reduction in the required video bandwidth. Furthermore, since the image words for one scan line are decoded to produce sub-pixel signals when the previous scan line is being imaged a more efficient imaging system results.

Several other features of the exposure station should be understood. First, the light emitting characteristics of the printbar 24 are carefully matched to the discharge characteristics of the photoreceptor 10. Light emitting diodes producing light at a wavelength of 720 nanometers (nm) and a photoreceptor designed for maximum discharge at a wavelength of 720 nm is a good combination. In some printbars it may be desirable to include printbar temperature sensing and LED drive circuitry for compensating drive currents as a function of temperature. Furthermore, while not shown, the printbar 24 includes a gradient index lens array that is positioned between the light emitting diode array 106 and the photoreceptor. That lens array focuses light from the various light emitting diodes onto the photoreceptor. Finally, the printbar 24 includes "pixel uniformity correction" circuitry that compensate for variations in efficiencies of the array of light emitting diodes such that equal light emission intensities are achieved along the printhead. These additional features, all known in the prior art, are useful in high quality exposure systems.

Referring now to Figure 1, after being exposed with a black latent image the image area passes a black development station 28 that advances black toner onto the black image area so as to develop a black toner image. Beneficially, the black development station is a scavengeless developer. One benefit of scavengeless development is that it does not disturb previously deposited toner layers. Biasing is such as to effect discharged area development (DAD) of the lower (less negative) of the two voltage levels on the photoreceptor. The charged black toner adheres to the exposed areas of the image area, thereby causing the voltage of the illuminated parts of the image area to be about -200 volts. The non-illuminated parts of the image area remain at about -500 volts.

After passing the black development station 28 the image area advances to the charging station. The DC scorotron 20 and the AC scorotron 22 then recharge the image area and its black toner layer using a technique known as split recharging. Split recharging is described in US-A-5,600,430. Briefly, the DC scorotron 20 overcharges the image are to a voltage level greater than that desired when the image area is recharged, while the AC scorotron reduces that voltage level to that which is desired. Split recharging serves to substantially eliminate voltage differences between toned areas and untoned areas and to reduce the level of residual charge remaining on the previously toned areas. This benefits subsequent development by different toners.

The recharged image area with its black toner layer then advances once again to the exposure station 23. There, using the same technique previously described, the printbar 24 exposes the image area to produce an electrostatic latent representation of a yellow image. The re-exposed image area then advances to a yellow development station 30 that deposits yellow toner onto the image area. After passing the yellow development station the image area advances once again to the charging station. There, the DC scorotron 20 and the AC scorotron 22 again recharge the image area using split recharging. The recharged image area with its black and yellow toners then advances once again to the exposure station.

The exposure station 23 then exposes the image area to produce an electrostatic latent representation of a magenta image. After passing the magenta exposure station the now re-exposed image area advances to a magenta development station 32 that deposits magenta toner onto the image area. After passing the magenta development station the image area advances yet again to the charging station where the DC scorotron and the AC scorotron again split recharge the image area.

The now recharged image area with its black, yellow, and magenta toner layers then advances once again to the exposure station 23. That station exposes the image area to produce an electrostatic latent representation of a cyan image. After passing the exposure station the now re-exposed image area advances past a cyan development station 34 that deposits cyan toner 34 onto the image area. At this time four colors of toner are on the image area, resulting in a composite color image. However, the composite color toner image is comprised of individual toner particles that have charge potentials that vary widely. Directly transferring such a composite toner image onto a substrate would result in a degraded final image. Therefore it is beneficial to prepare the composite color toner image for transfer.

To prepare for transfer a pretransfer erase lamp 39 discharges the image area to produce relatively low charge levels on the image area. The image area then passes a pretransfer DC scorotron 40 that performs a pre-transfer charging function. The image area continues to advance in the direction 12 past the driven roller 14. A substrate 41 is then placed over the image area using a sheet feeder (which is not shown). As the image area and substrate continue their travel they pass a transfer scorotron 42 that applies positive ions onto the back of the substrate 41. Those ions attract the negatively charged toner particles onto the substrate.

As the substrate continues its travel is passes a detack scorotron 43. That scorotron neutralizes some of the charge on the substrate to assist separation of the substrate from the photoreceptor 10. As the lip of the substrate 41 moves around the tension roller 16 the leading lip separates from the photoreceptor. The substrate is then directed into a fuser 44 where a heated fuser roller 46 and a pressure roller 48 create a nip through which the substrate 41 passes. The combination of pressure and heat at the nip causes the composite color toner image to fuse into the substrate. After fusing, a chute, not shown, guides the substrate to a catch tray, also not shown, for removal by an operator.

After the substrate 41 separates from the photoreceptor 10 the image area continues its travel and passes a preclean erase lamp 50. That lamp neutralizes most of the charge remaining on the photoreceptor. After passing the preclean erase lamp the residual toner and/or debris on the photoreceptor is removed at a cleaning station 54. The image area then passes once again to the precharge erase lamp 18 and the start of another printing cycle.

## Claims

1. An imaging device, comprising:
an electronic subsystem (25) for transmitting a plurality of digital words, each digital word comprised of N bits, along a bus, wherein N is at least 2;
a machine controller (26) for controlling the operation of the imaging device;
a data latch (120) for storing a digital word on said bus in response to a latch signal from said machine controller (26);
a decoder (102) for decoding said stored digital word into a plurality of subpixel binary data bits;
a parallel to serial converter (132) for serially shifting the subpixel binary data bits onto a subpixel gate line in response to an exposure clock from said machine controller (26); and
a gate (134) selectively applying information on said subpixel gate line to an drive line in response to a strobe signal from said machine controller (26);
wherein a light emitting element (105) illuminates when the logic level on said drive line is at one state; and
wherein said digital word represents a pixel exposure profile.

2. A printer, comprising
a charged photoreceptor (10) moving in a process direction (12);
a light emitting printbar (24) having a plurality of light emitting elements (105) positioned in an image exposure relationship with said photoreceptor (10); and,
an imaging device according to claim 1, wherein a light emitting element (105) of said of light emitting print bar (24) illuminates when the logic level on said drive line is at one state, thereby producing a latent image on said charged photoreceptor (10);

3. An imaging device according to claim 1 or 2, wherein said light emitting element (105) is a light emitting diode.

4. An imaging device according to any one of the preceding claims, wherein said decoder (102) decodes said stored digital word into subpixel binary data bits.

5. An imaging device according to any one of the preceding claims, wherein said electronic subsystem transmits digital words when signaled by said machine controller (26).

6. An imaging device according to claim 5, wherein said electronic subsystem (25) sends said plurality of digital words when said parallel to serial converter (132) serially shifts information onto said subpixel gate line.

7. An apparatus, comprising:
a light emitting printbar having a plurality of individual light emitting elements;
a data source for supply a multiple bit word for each light emitting element, wherein each word represents the sub-intervals of a pixel period in which an associated light emitting element is to be illuminated;
a look-up table for decoding the digital word such that a binary output is placed on a plurality of data lines;
a parallel-to-serial converter receiving the binary outputs on said plurality of data lines, said parallel-to-serial converter for serially applying, in response to an exposure clock, each binary output to a gate output;
a logic element for selectively outputting the signal on the gate output to an output drive line; and
a controller applying the exposure clock to said parallel-to-serial converter and for supplying the strobe signal to said logic element.

8. An apparatus according to claim 7, wherein said look-up table decodes said stored digital word into a plurality of binary outputs.

9. An apparatus according to claim 7 or 8, further including a latch for temporarily storing said word and for applying said stored word to said look-up table.

10. An apparatus according to claim 7, 8 or 9, further including a light source that illuminates a pixel when the logic level on said output drive line is at one state.
